# EUROPEAN PATENT APPLICATION

(11) **EP 3 614 339 A1**
(43) Date of publication of application: **26.02.2020**
(21) Application number: 18189999.8
(22) Date of filing: 21.08.2018
(51) Int. Cl.: G06T 7/50

(54) **METHOD, APPARATUS, COMPUTER-READABLE STORAGE MEDIA AND A COMPUTER PROGRAM FOR 3D RECONSTRUCTION**

(71) Applicant: Siemens Ltd. China, Beijing 100102 (CN)
(72) Inventor: SHENDRYK, Dmytro, Beijing, 102218 (CN)
(74) Representative: Isarpatent

(57) **Abstract**

The object of the present disclosure is to provide a solution for 3D reconstruction, to automatically annotate an object in a 3D reconstructed model. A method for 3D reconstruction comprises following step: recognizing an object in a first dataset according to a 2D trained model of the object, wherein the first dataset includes 2D images of a first target to be 3D reconstructed, and the recognized object is in the first target; adding a 3D annotation in the first target to the recognized object, according to the description of the object by the 2D trained model so that an annotation can be added automatically through auto object recognition and with the description of the object by the pre-trained 2D model of the object.

## Description

The present invention relates to techniques of 3D reconstruction, and more particularly to a method, apparatus, computer-readable storage media and a computer program for adding a 3D annotation in a 3D reconstruction model of a target to an object, and a method, apparatus, computer-readable storage media and a computer program of model training to train a 2D model of an object to be annotated in a target.

In computer vision and computer graphics, 3D (three dimensional) reconstruction is a process of capturing shape and appearance of real objects. With 3D reconstruction, assets in a factory can be brought from a physical world to a digital world, which can provide interactions for the user, for example to remotely maintain a factory.

One challenge for 3D reconstruction is automatic recognition of objects in a 3D model, which requires the objects to be annotated in a 3D model. Before, the annotation was usually done manually, which is very time and labor consuming. For a big 3D model of a factory, annotation for all objects usually took couple of months.

Thus the object of the present disclosure is to provide a method, apparatus, computer-readable storage media and a computer program for 3D reconstruction. With solutions provided in this disclosure, a 3D model with automatically annotated objects can be output as a result of 3D reconstruction.

The above objects are achieved by a method for adding an annotation in a 3D reconstructed target according to claim 1, a method of model training according to claim 5, an apparatus for adding an annotation in a 3D reconstructed target according to claim 6 or 11, an apparatus of model training according to claim 10 or 12, a computer-readable storage media according to claim 13, a computer program according to claim 14 of the present technique.

Advantageous embodiments of the present technique are provided in dependent claims. Features of independent claims may be combined with features of claims dependent on the respective independent claim, and features of dependent claims can be combined together, unless otherwise indicated.

Before, an annotation to an object in a 3D model of a target was usually done manually, which is very time and labor consuming. This present disclosure provides a solution to automatically add a 3D annotation to an object in a 3D reconstructed model of a target. An annotation can be added automatically through automatic object recognition and with the description of the object by the pre-trained 2D model of the object.

According to a first aspect of the present disclosure, a method for adding an annotation in a 3D reconstructed target is presented, it comprises:
- recognizing an object in a first dataset, according to a 2D trained model of the object, wherein the first dataset includes 2D images of a first target to be 3D reconstructed, and the object is in the first target; and - - adding a 3D annotation in a 3D reconstructed model of first target to the object, according to description of the object by the 2D trained model.

According to a second aspect of the present disclosure, a method of model training is presented, it comprises:
- generating a 3D reconstructed model of a second target containing an object,
- getting a manual annotation in the 3D reconstructed model of second target to the object,
- extracting, from the 3D reconstructed model of the second target, at least one 2D image of the object with the manual annotation,
- finding at least one 2D image containing the object, by matching the extracted at least one 2D image with
- a second 2D dataset used to generate the 3D reconstructed model of the second target, and/or
- a third 2D dataset including at least one 2D image containing the object,
- getting a 2D trained model from the found at least one 2D image containing the object, and
- recording the description of the object from the manual annotation as the description of the object by the 2D trained model.

According to a third aspect of the present disclosure, an apparatus for adding an annotation in a 3D reconstructed target is presented, it comprises:
- an object recognition module, configured to recognize an object in a first dataset, according to a 2D trained model of the object, wherein the first dataset includes 2D images of a first target to be 3D reconstructed, and the object is in the first target;
- an annotation adding module, configured to add a 3D annotation in a 3D reconstructed model of first target to the object, according to description of the object by the 2D trained model.

According to a fourth aspect of the present disclosure, an apparatus of model training is presented, it comprises:
- a 3D reconstruction module, configured to generate a 3D reconstructed model of a second target containing an object,
- a manual annotation module, configured to get a manual annotation in the 3D reconstructed model of second target to the object,
- an image extraction module, configured to extract, from the 3D reconstructed model of the second target, at least one 2D image of the object with the manual annotation,
- a matching module, configured to find at least one 2D image containing the object, by matching the extracted at least one 2D image with
- a second 2D dataset used to generate the 3D reconstructed model of the second target, and/or
- a third 2D dataset including at least one 2D image containing the object,
- a training module, configured to get a 2D trained model from the found at least one 2D image containing the object, and
- a description recording module, configured to record the description of the object from the manual annotation as the description of the object by the 2D trained model.

According to a fifth aspect of the present disclosure, a method for adding an annotation in a 3D reconstructed target is presented, it comprises:
- a processor;
- a memory in electronic communication with the processor; and
- instructions stored in the memory, the instructions being executable by the processor to execute a method according to the first aspect presented in this disclosure.

According to a sixth aspect of the present disclosure, an apparatus of model training is presented, it comprises:
- a processor;
- a memory in electronic communication with the processor; and
- instructions stored in the memory, the instructions being executable by the processor to execute a method according to the second aspect of the present disclosure.

According to a seventh aspect of the present disclosure, a computer-readable storage media is presented, which has stored thereon: instructions executable by one or more processors of a computer system, wherein execution of the instructions causes the computer system to perform the method according to the first aspect or the second aspect of the present disclosure.

According to an eighth aspect of the present disclosure, a computer program is presented, it is being executed by one or more processors of a computer system and performs the method according to the first aspect or the second aspect of the present disclosure.

A solution is provided for automatically adding 3D annotation to an object in a 3D reconstructed model of a target. An annotation can be added automatically through automatic object recognition and with the description of the object by the pre-trained 2D model of the object. The solution saves time and labor, also with a precise 2D model of an object, an annotation can be added precisely.

In an embodiment of the present disclosure, when adding a 3D annotation in the 3D reconstructed model of the first target to the object, first determining a 2D position of the object in each 2D image recognized as containing the object in the first dataset, then calculating a 3D position of the object in the first target, according to the 2D position of the object in the each 2D image, and adding the description of the object by the 2D trained model in the 3D reconstructed model of the first target 201, according to the calculated 3D position of the object in the first target. So that an 2D annotation (2D position and description of the object) can be changed into a 3D annotation.

In an embodiment of the present disclosure, the 2D trained model can be got from at least one 2D image containing the object, and the description of the object can be got from a manual annotation in a 3D reconstructed model of a second target to the object, as the description of the object by the 2D trained model.
So that the 2D model of the object can be trained for automatic recognition of the object in a dataset, and description of the object, as part of the annotation, can be got and linked to the 2D trained model, for later automatic annotation to the object in the 3D reconstructed model.

In an embodiment of the present disclosure, 2D images for model training and description of the object as part of the annotation can be got as such:
- generating the 3D reconstructed model of the second target,
- getting the manual annotation in the 3D reconstructed model of the second target to the object,
- extracting, from the 3D reconstructed model of the second target, at least one 2D image of the object with the manual annotation, and
- finding at least one 2D image for training the 2D trained model, by matching the extracted at least one 2D image with
- a second 2D dataset used to generate the 3D reconstructed model of the second target, and/or
- a third 2D dataset including at least one 2D image containing the object.
So that, manual annotation to an object can be done only once, then 2D images of the object can be got for model training, and description of the object can be got and later be added to the object in the reconstructed 3D model according to the position recognized and calculated through automatic object recognition.

The above mentioned attributes and other features and advantages of the present technique and the manner of attaining them will become more apparent and the present technique itself will be better understood by reference to the following description of embodiments of the present technique taken in conjunction with the accompanying drawings, wherein:
- FIG 1: Depicts a flowchart displaying an exemplary embodiment of a method for adding an annotation in a 3D re-constructed target of the present disclosure
- FIG 2: Depicts a flowchart displaying an exemplary embodiment of a method of model training of the present disclosure
- FIG 3: Depicts a target to be 3D reconstructed an interested object in the target
- FIG 4: Depicts data collection in the flowchart shown in FIG 1
- FIG 5: Depicts Object recognition in the flowchart shown in FIG 1
- FIG 6: Depicts feature matching in the flowchart shown in FIG 1
- FIG 7: Depicts an annotated 3D model generated by the method of the present disclosure
- FIG 8: Depicts a block diagram displaying a first exemplary embodiment of an apparatus for adding an annotation in a 3D reconstructed target of the present disclosure
- FIG 9: Depicts a block diagram displaying a second exemplary embodiment of an apparatus for adding an annotation in a 3D reconstructed target of the present disclosure
- FIG 10: Depicts a block diagram displaying a first exemplary embodiment of an apparatus of model training of the present disclosure
- FIG 11: Depicts a block diagram displaying a second exemplary embodiment of an apparatus of model training of the present disclosure

### Reference numerals:

100, object to be annotated
201, a first target to be 3D reconstructed
202, a second target to be 3D reconstructed
300, an annotation to the object 100 in a target to be 3D
reconstructed
300a, a 3D position of the object 100 in a target
300b, description of the object 100
S101: object recognition
S102: 3D annotation
S1021: 2D position determination
S1022: 3D position calculation
S1023: adding description of the object according to the calculated 3D position
S201: data collection
S202: 3D reconstruction
S203: manual annotation
S204: recording the description of the annotation 102 S205: 2D image extraction
S206: feature matching
S207: more dataset(s) search
S208: model training
S209: description recording
400, an apparatus for adding an annotation in a 3D reconstructed target
500, an apparatus of model training
401, an object recognition module
402, an annotation adding module
403, a training module
404, a description recording module
405, a 3D reconstruction module
406, a manual annotation module
407, an image extraction module
408, a matching module
409, a processor
410, a memory
501, a processor
502, a memory

Hereinafter, above-mentioned and other features of the present technique are described in details. Various embodiments are described with reference to the drawing, wherein like reference numerals are used to refer to like elements throughout. In the following description, for purpose of explanation, numerous specific details are set forth in order to provide a thorough understanding of one or more embodiments. It may be noted that the illustrated embodiments are intended to explain, and not to limit the invention. It may be evident that such embodiments may be practiced without these specific details.

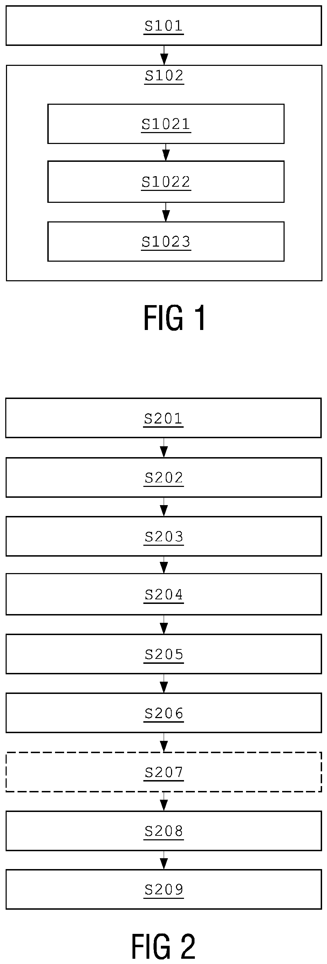

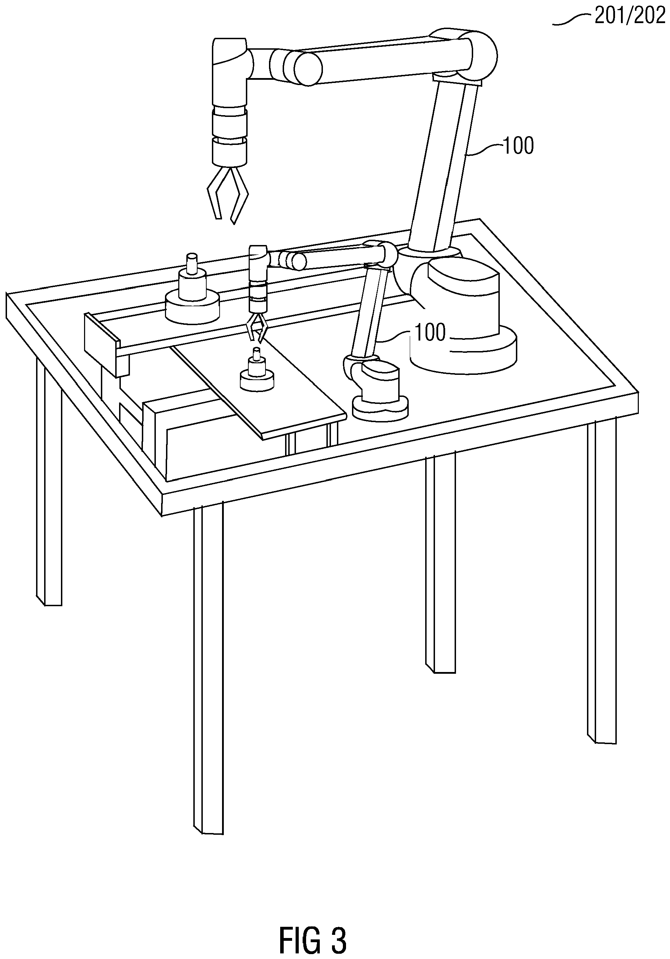

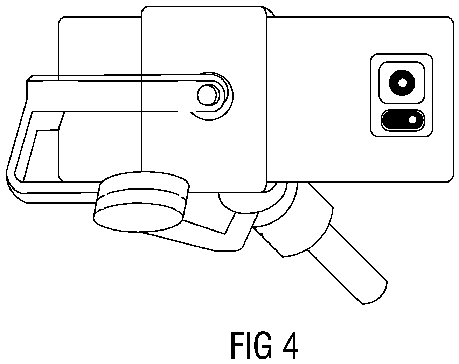

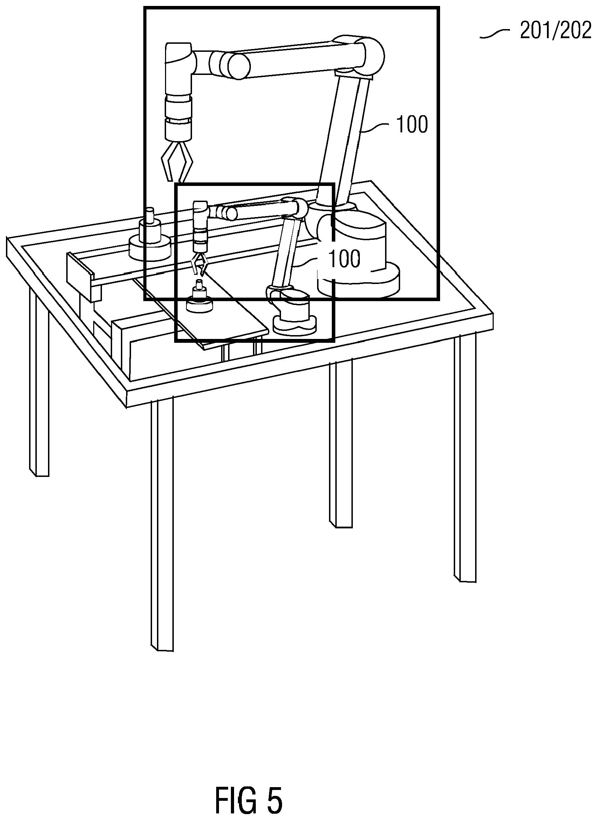

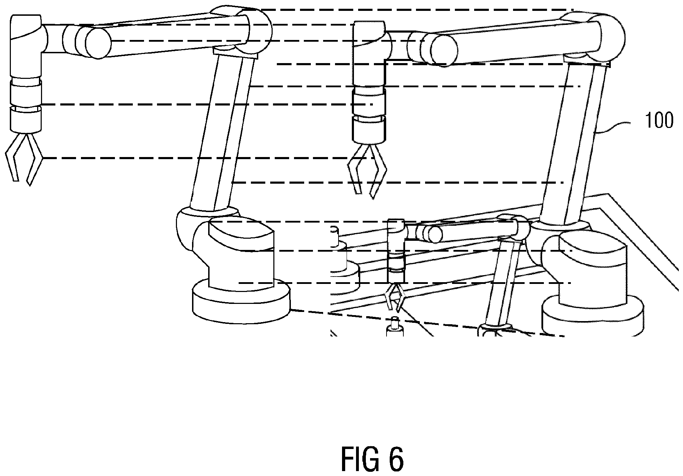

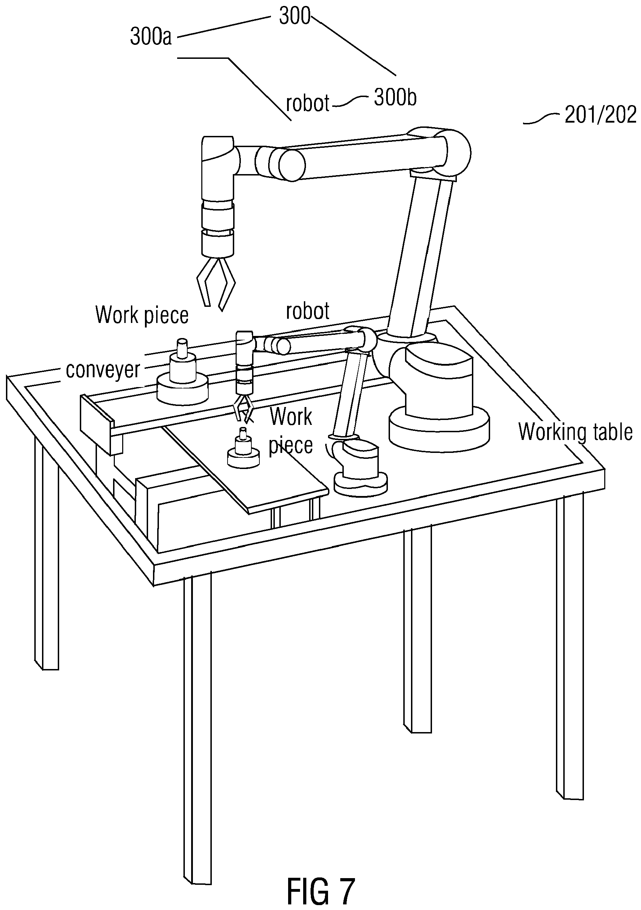

The present technique has been described hereinafter in details by referring to FIG 1 to 11.

In the embodiments presented, a target to be 3D reconstructed can be a factory, or part of a factory, such as a production line, or part of a production line. An object can be a robot, a conveyer, a CNC machine, etc. Optionally, an object can be a specific version of a robot, that is, different versions will be considered as different objects.
A dataset used to 3D reconstruct a target may include 2D (2 Dimensional) images. Commonly 3D reconstruction is based on two or more 2D images, although it may use only one 2D image in some cases. There are various types of methods for 2D image acquisition, which depends on occasions and purposes of a specific application. Not only the requirements of the application must be met, but also the visual disparity, illumination, performance of camera and the feature of scenario should be considered. Optionally, a dataset can be collected by a phone, such as taking video and processing the taken video into images for purpose of 3D reconstruction.
Generally, an annotation to an object in a target has at least following 2 elements: first is the position of the object in the target, second is the description of the object, such as the classifier, identifier, producer, etc.
A manual annotation is a manually added annotation by a user, that is, the user finds the position of an object in a target, and adds description of the object, preferably near the position of the object, to indicate that the description is for the object.
An automatic annotation is an automatically added annotation, by a computer program or other automatic tools . That is, the position of an object in a target is found automatically, and the description is added automatically.

FIG 1 shows a method for adding an annotation in a 3D reconstructed target, wherein firstly, according to a 2D trained model of the object, recognizing an object in a first dataset containing 2D images of a first target to be 3D reconstructed; then adding a 3D annotation in the first target to the recognized object, according to description of the object by the 2D trained model. The method can comprise following steps:

### - S101: object recognition.

In this step, a 2D trained model is used to recognize an object 100 in a first dataset, which includes 2D images of a first target 201 to be reconstructed.

### - S102: 3D annotation

In this step, a 3D annotation is automatically added in the first target 201 to the recognized object 100 in S101, according to description 300b of the object 100 by the 2D trained model. Wherein S102 can comprise following sub-steps:

### - S1021: 2D position determination

In this sub-step, a 2D position is determined of the recognized object 100 in each 2D image recognized as containing the object 100 in the first dataset.

The position of the object 100 in a 2D image can be found automatically as a result of object recognition.

### - S1022: 3D position calculation

In this sub-step, a 3D position 300a of the recognized object 100 is calculated in the first target 201, according to the determined 2D position of the recognized object 100 in the each 2D image. For the position of the object 100 in a 2D image has been found in the sub-step S1021, with the conversion relationship from a 2D position into a 3D position, the position of the object in a 3D model can be calculated.

### - S1023: adding description of the object according to the calculated 3D position

In this sub-step, the description 300b of the object 100 by the 2D trained model is added, according to the calculated 3D position 300a of the recognized object 100 in the first target 201. So the description 300b can be located according to the calculated 3D position 300a when the 3D annotation is added to the object 100. OpenCV, Tensorflow, PyTorch, Caffe2 can be used in step S102. With the method shown in FIG 1, an object in the 3D reconstructed target can be automatically annotated with the description of the object by the 2D trained model.

FIG2 shows a method of model training, by which the 2D trained model can be got and the description of the object 100 can also be recorded and linked to the 2D trained model. Wherein, a second target 202 can be 3D reconstructed first, then a manual 3D annotation 300 to an object 100 in the second target 202 can be got. With extracted 2D images of the object 100 from the 3D reconstructed model of the target 202, the 2D model of the object 100 can be trained, and the description 300b of the object 100 from the manual 3D annotation 300 can be recorded and linked to the 2D trained model of the object 100.

The method can comprise following steps:

### - S201: data collection.

In this step, a second dataset of a second target 202 to be reconstructed is collected.

### - S201: 3D reconstruction.

In this step, 3D reconstruction is executed for the second target 202.
The second dataset collected in step S can be processed to get a 3D model of the second target 202. The 3D model can be a reconstructed mesh with textures.
In this embodiment, SFM algorithm, OpenMVS and OpenMVG can be used for the geometry and point cloud mapping during the 3D reconstruction.
The result provides the 3D model that can be manipulated and used for manual annotations in step S203.

### - S203: manual annotation(s).

In this step, a manual annotation 300 is added to an interested object 100 in the second target 202 is done by a user. Here, in this step, a user interface can be provided to a user, such as a GUI (Graphic User Interface). The user manually annotates the object 100 in the second target 202 on the 3D model. Of course, the user can also annotate other interested objects in the second target 202.

Unity 3D WebGL, OpenGL, etc can be used for manual annotations.

### - S204: recording the description 300b of the manual annotation 300

In this step, the description 300b of the manual annotation 300 will be recorded and linked to the object 100 in the 3D reconstructed model.

### - S205: 2D image extraction

In this step, one or more 2D image of the object 100 is extracted from the 3D reconstructed model. Usually, the extracted 2D image just contains the object 100 alone, without background of the object 100 in the second target 202. Preferably, more than one 2D image are extracted, usually from different view of angles, for precise display of the object 100. For the description 300b of the manual annotation 300 is recorded and linked to the object 100 in step S204, here in this step the description 300b of the manual annotation 300 is also linked to the extracted 2D image (s) .

### - S206: feature matching

In this step, the one or more 2D image of the object 100 extracted from the 3D model is compared with 2D images in the second dataset. OpenCV can be used to find features respectively from the extracted 2D image and the 2D images in the second dataset. 2D images containing the object 100 can be found. For example, there are 2 robots in the second target 202, which are robot A and robot B, the manual annotated robot is the robot A. For the first option, 2D images only containing robot A in the second dataset will be found; while for the second option, not only 2D images containing robot A, but also 2D images containing robot B will be found. In this embodiment, if more than 20 features are matched, it can be concluded that a 2D image in the dataset has been found. For the description 300b of the manual annotation 300 is linked to the extracted 2D image, here in this step, the description 300b of the manual annotation 300 is also linked to the matched 2D images in the second dataset.

### - (optional) S207: more dataset(s) search

In this optional step, a crawler can be used to find more dataset (s) which contains the object 100, such as a third 2D dataset. For the description 300b of the manual annotation 300 is linked to the extracted 2D image, here in this step, the description 300b of the manual annotation 300 is also linked to the searched out 2D images in the dataset.

### - S208: model training

2D images in the second dataset found in the step S206 and/or optional third dataset (s) found in the step S207 can be used for model training, to train a model of the object 100, for recognition of the object 100 in a 2D image.
For the description 300b of the manual annotation 300 is linked to the matched 2D images in the second dataset and/or optionally to the searched out 2D images in the third dataset(s), here in this step, the description 300b of the manual annotation 300 is also linked to the description 300b of the manual annotation 300.

### - S209: description recording

In this step, the description 300b of the object 100 got from the manual annotation 300 is recorded as the description 300b of the object 100 by the 2D trained model. Then the trained model of the object 100 with the description 300b can be used for object recognition and 3D annotation in any target containing the object 100.

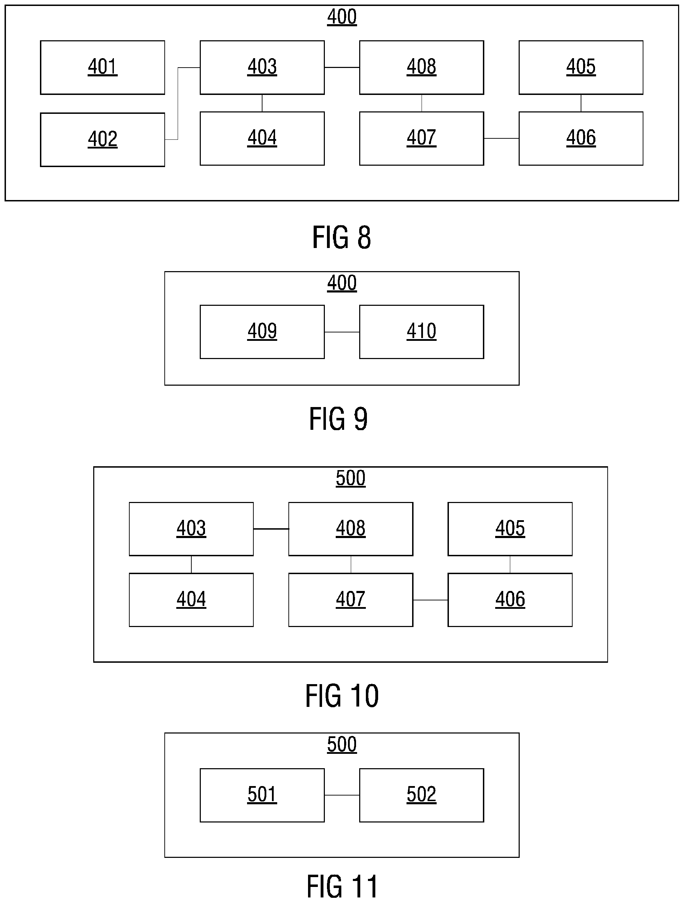

FIG 8 depicts a block diagram displaying a first exemplary embodiment of an apparatus for adding an annotation in a 3D reconstructed target of the present disclosure, which comprises:
- an object recognition module 401, configured to recognize an object 100 in a first dataset, according to a 2D trained model of the object 100, wherein the first dataset includes 2D images of a first target 201 to be 3D reconstructed, and the object 100 is in the first target 201;
- an annotation adding module 402, configured to add a 3D annotation 300 in a 3D reconstructed model of first target 201 to the object 100, according to description 300b of the object 100 by the 2D trained model.

Optionally, the annotation adding module 402 is further configured to:
- determine a 2D position of the object 100 in each 2D image recognized as containing the object 100 in the first dataset,
- calculate a 3D position 300a of the object 100 in the first target 201, according to the 2D position of the object 100 in the each 2D image, and
- add the description 300b of the object 100 by the 2D trained model in the 3D reconstructed model of the first target 200, according to the calculated 3D position 300a of the object 100 in the first target 201.

Optionally, the apparatus 400 further comprises:
- a training module 403, configured to get the 2D trained model from at least one 2D image containing the object 100, and
- a description recording module 404, configured to record the description 300b of the object 100 got from a manual annotation 300 in a 3D reconstructed model of a second target 202 to the object 100, as the description 300b of the object 100 by the 2D trained model, wherein the second target 202 is the first target 201, or the second target 202 is another target other than the first target 201 and contains the object 100.

Optionally, the modules 401-408 can be seen as programming modules, including instructions, stored in a memory 410 in electronic communication with a processor 409, when executed by the processor 409, can cause the apparatus 400 to implement the method for adding an annotation in a 3D reconstructed target disclosed in this disclosure.
Or the modules 401-408 can be seen as hardware modules, which can be implemented by FPGA (Field-Programmable Gate Array), CPLD (Complex Programmable Logic Device), ASIC (Application Specific Integrated Circuits) etc., with the logic of adding an annotation in a 3D reconstructed target loaded in these programmable logic devices.
Or the modules 401-408 can be seen as functional modules implemented by both software and hardware. For example, the object recognition module 401 can be implemented by a programmable logic device, and the other modules can be implemented by instructions' being executed by the processor 409.

FIG 10 depicts a block diagram displaying a first exemplary embodiment of an apparatus 500 of model training of the present disclosure, which comprises:
- a 3D reconstruction module 405, configured to generate a 3D reconstructed model of a second target 202 containing an object 100,
- a manual annotation module 406, configured to get a manual annotation 300 in the 3D reconstructed model of second target 202 to the object 100,
- an image extraction module 407, configured to extract, from the 3D reconstructed model of the second target 202, at least one 2D image of the object 100 with the manual annotation 300,
- a matching module 408, configured to find at least one 2D image containing the object 100, by matching the extracted at least one 2D image with
- a second 2D dataset used to generate the 3D reconstructed model of the second target 202, and/or
- a third 2D dataset including at least one 2D image containing the object 100,
- a training module 403, configured to get a 2D trained model from the found at least one 2D image containing the object 100,and
- a description recording module 404, configured to record the description 300b of the object 100 from the manual annotation 300 as the description 300b of the object 100 by the 2D trained model.

Optionally, the modules 403-408 can be seen as programming modules, including instructions, stored in a memory 502 in electronic communication with a processor 501, when executed by the processor 502, can cause the apparatus 500 to implement the method for model training disclosed in this disclosure.
Or the modules 403-408 can be seen as hardware modules, which can be implemented by FPGA (Field-Programmable Gate Array), CPLD (Complex Programmable Logic Device), ASIC (Application Specific Integrated Circuits) etc., with the logic of adding annotation in a 3D reconstructed model loaded in these programmable logic devices.
Or the modules 403-408 can be seen as functional modules implemented by both software and hardware. For example, the 3D reconstruction module 405 can be implemented by a programmable logic device, and the other modules can be implemented by instructions' being executed by the processor 502.

A computer-readable storage media is also provided in the present disclosure, having stored thereon:
- instructions executable by one or more processors of a computer system, wherein execution of the instructions causes the computer system to perform the method presented in this disclosure.

A computer program, which is being executed by one or more processors of a computer system and performs the method presented in this disclosure.

The present disclosure provides a method, apparatus computer-readable storage media and a computer program for a target's 3D reconstruction. The target can be a factory, or part of a factory, an industrial device or part of a industrial device. The target can also be something not in industrial domain. With the technical solution provided in the present disclosure, a user needs to annotate an object only one time, then after training an object will be recognized automatically.

While the present technique has been described in detail with reference to certain embodiments, it should be appreciated that the present technique is not limited to those precise embodiments. Rather, in view of the present disclosure which describes exemplary modes for practicing the invention, many modifications and variations would present themselves, to those skilled in the art without departing from the scope and spirit of this invention. The scope of the invention is, therefore, indicated by the following claims rather than by the foregoing description. All changes, modifications, and variations coming within the meaning and range of equivalency of the claims are to be considered within their scope.

## Claims

1. A method for adding an annotation in a 3D reconstructed target, the method comprising:
- recognizing an object (100) in a first dataset, according to a 2D trained model of the object (100), wherein the first dataset includes 2D images of a first target (201) to be 3D reconstructed, and the object (100) is in the first target (201);
- adding a 3D annotation (300) in a 3D reconstructed model of first target (201) to the object (100), according to description (300b) of the object (100) by the 2D trained model.

2. The method according to the claim 1, wherein the step of adding a 3D annotation (300) in a 3D reconstructed model of the first target (201) to the object (100) comprises:
- determining a 2D position of the object (100) in each 2D image recognized as containing the object (100) in the first dataset,
- calculating a 3D position (300a) of the object (100) in the first target (201), according to the 2D position of the object (100) in the each 2D image, and
- adding the description (300b) of the object (100) by the 2D trained model in the 3D reconstructed model of the first target (201), according to the calculated 3D position (300a) of the object (100) in the first target (201).

3. The method according to the claim 1 or 2, wherein before recognizing an object (100) in a first dataset, the method further comprises:
- obtaining the 2D trained model from at least one 2D image containing the object (100), and
- recording the description (300b) of the object (100) got from a manual annotation (300) in a 3D reconstructed model of a second target (202) to the object (100), as the description (300b) of the object (100) by the 2D trained model, wherein the second target (202) is the first target (201), or the second target (202) is another target other than the first target (201) and contains the object (100).

4. The method according to the claim 3, wherein before getting the 2D trained model from at least one 2D image containing the object (100), the method further comprises:
- generating the 3D reconstructed model of the second target (202),
- getting the manual annotation (300) in the 3D reconstructed model of the second target (202) to the object (100),
- extracting, from the 3D reconstructed model of the second target (202), at least one 2D image of the object (100) with the manual annotation (300), and
- finding at least one 2D image for training the 2D trained model, by matching the extracted at least one 2D image with
- a second 2D dataset used to generate the 3D reconstructed model of the second target (202), and/or
- a third 2D dataset including at least one 2D image containing the object (100).

5. A method of model training, the method comprising:
- generating a 3D reconstructed model of a second target (202) containing an object (100),
- getting a manual annotation (300) in the 3D reconstructed model of second target (202) to the object (100),
- extracting, from the 3D reconstructed model of the second target (202), at least one 2D image of the object (100) with the manual annotation (300),
- finding at least one 2D image containing the object (100), by matching the extracted at least one 2D image with
- a second 2D dataset used to generate the 3D reconstructed model of the second target (202), and/or
- a third 2D dataset including at least one 2D image containing the object (100),
- getting a 2D trained model from the found at least one 2D image containing the object (100),
- recording the description (300b) of the object (100) from the manual annotation (300) as the description (300b) of the object (100) by the 2D trained model.

6. An apparatus (400) for adding an annotation in a 3D reconstructed target, the apparatus comprising:
- an object recognition module (401), configured to recognize an object (100) in a first dataset, according to a 2D trained model of the object (100), wherein the first dataset includes 2D images of a first target (201) to be 3D reconstructed, and the object (100) is in the first target (201);
- an annotation adding module (402), configured to add a 3D annotation (300) in a 3D reconstructed model of first target (201) to the object (100), according to description (300b) of the object (100) by the 2D trained model.

7. The apparatus according to the claim 6, wherein the annotation adding module (402) is further configured to:
- determine a 2D position of the object (100) in each 2D image recognized as containing the object (100) in the first dataset,
- calculate a 3D position (300a) of the object (100) in the first target (201), according to the 2D position of the object (100) in the each 2D image, and
- add the description (300b) of the object (100) by the 2D trained model in the 3D reconstructed model of the first target (201), according to the calculated 3D position (300a) of the object (100) in the first target (201).

8. The apparatus according to the claim 6 or 7, wherein the apparatus further comprises:
- a training module (403), configured to get the 2D trained model from at least one 2D image containing the object (100), and
- a description recording module (404), configured to record the description (300b) of the object (100) got from a manual annotation (300) in a 3D reconstructed model of a second target (202) to the object (100), as the description (300b) of the object (100) by the 2D trained model, wherein the second target (202) is the first target (201), or the second target (202) is another target other than the first target (201) and contains the object (100) .

9. The apparatus according to the claim 8, wherein the apparatus further comprises:
- a 3D reconstruction module (405), configured to generate the 3D reconstructed model of the second target (202),before the training module (403) getting the 2D trained model from at least one 2D image containing the object (100):
- a manual annotation module (406), configured to get the manual annotation (300) in the 3D reconstructed model of the second target (202) to the object (100),
- an image extraction module (407), configured to extract from the 3D reconstructed model of the second target (202), at least one 2D image of the object (100) with the manual annotation (300), and
- a matching module (408), configured to find at least one 2D image for training the 2D trained model, by matching the extracted at least one 2D image with
- a second 2D dataset used to generate the 3D reconstructed model of the second target (202), and/or
- a third 2D dataset including at least one 2D image containing the object (100).

10. An apparatus (500) of model training, the apparatus comprising:
- a 3D reconstruction module (405), configured to generate a 3D reconstructed model of a second target (202) containing an object (100),
- a manual annotation module (406), configured to get a manual annotation (300) in the 3D reconstructed model of second target (202) to the object (100),
- an image extraction module (407), configured to extract, from the 3D reconstructed model of the second target (202), at least one 2D image of the object (100) with the manual annotation (300),
- a matching module (408), configured to find at least one 2D image containing the object (100), by matching the extracted at least one 2D image with
- a second 2D dataset used to generate the 3D reconstructed model of the second target (202), and/or
- a third 2D dataset including at least one 2D image containing the object (100),
- a training module (403), configured to get a 2D trained model from the found at least one 2D image containing the object (100),and
- a description recording module (404), configured to record the description (300b) of the object (100) from the manual annotation (300) as the description (300b) of the object (100) by the 2D trained model.

11. An apparatus (400) for adding an annotation in a 3D reconstructed target, the apparatus comprising:
- a processor (409);
- a memory (410) in electronic communication with the processor (409); and
- instructions stored in the memory (410), the instructions being executable by the processor (409) to execute a method according to any claim of the claims 1 to 4.

12. An apparatus(500) of model training, the apparatus comprising:
- a processor (501);
- a memory (502) in electronic communication with the processor (501); and
- instructions stored in the memory (502), the instructions being executable by the processor (501) to execute a method according to claim 5.

13. A computer-readable storage media having stored thereon:
- instructions executable by one or more processors of a computer system, wherein execution of the instructions causes the computer system to perform the method according to any one of the claims 1 to 5.

14. A computer program, which is being executed by one or more processors of a computer system and which is configures to perform a method according to anyone of the claims 1 to 5.
